# Europäisches Patentamt
# European Patent Office
# Office européen des brevets

(11) Veröffentlichungsnummer: **0 142 824**
**B1**

(12) **EUROPÄISCHE PATENTSCHRIFT**

(45) Veröffentlichungstag der Patentschrift:
16.03.88

(21) Anmeldenummer: **84113795.3**

(22) Anmeldetag: **15.11.84**

(51) Int. Cl.⁴: **F 16 L 29/00**

(54) **Messkupplung für fluidische Systeme.**

(30) Priorität: **19.11.83 DE 3341860**

(43) Veröffentlichungstag der Anmeldung:
**29.05.85 Patentblatt 85/22**

(45) Bekanntmachung des Hinweises auf die Patenterteilung:
**16.03.88 Patentblatt 88/11**

(84) Benannte Vertragsstaaten:
**AT BE CH FR GB IT LI NL SE**

(56) Entgegenhaltungen:
**DE-A-3 202 422**
**DE-U-1 998 340**
**DE-U-8 416 303**
**US-A-4 096 754**
**US-A-4 186 910**

(73) Patentinhaber: **Hydrotechnik GmbH, Holzheimer Strasse 94- 96, D-6250 Limburg 1 (DE)**

(72) Erfinder: **Leverberg, Siegfried, Bremenkampstrasse 77, D-4200 Oberhausen 14 (DE)**
Erfinder: **Hofmann, Manfred, Lahnblick 28, D-6251 Altendiez (DE)**

(74) Vertreter: **Linser, Heinz, Patentanwälte Heinz Linser Dipl. Ing. Eckhardt Eyer Robert- Bosch-Strasse 12a Postfach 10 22 10, D-6072 Dreieich (DE)**

EP 0 142 824 B1

## Beschreibung

Die Erfindung betrifft eine Meßkupplung für fluidische Systeme zur Erfassung von Arbeitsdrücken oder Temperaturen der fluidischen Medien, bestehend aus einer im eingebauten Zustand unter Leitungsdruck stehenden Kupplungsbuchse, in deren Bohrung ein rederbelastetes und mechanisch betätigbares Rückschlagventil angeordnet ist, welches als ein mit einer zylindrischen Bohrung und einer geschlossenen Bodenfläche versehener Ventilkörper ausgebildet ist, wobei in der Wandung des Ventilkörpers eine radiale Querbohrung oder ein Querschlitz angeordnet ist.

Aus der DE-U-1 998 340 ist eine als selbsttätig schließender Nippel ausgebildete Kupplung bekannt, welche die eingangs aufgeführten Merkmale aufweist und als Meßkupplung eingesetzt werden kann. Sie dient zum Beispiel zur Herstellung von Prüf- oder Meßanschlüssen an Druckleitungen, wobei in der Regel die Kupplungsbuchse mit ihrem Einschraubgewinde fest an der Druckleitung eines fluidischen Systems installiert ist. Für die Dauer der Prüf- oder Meßarbeiten wird auf diese Kupplungsbuchse ein als Hohlzapfen ausgebildeter Dichtnippel mittels Überwurfmutter aufgeschraubt, der fest mit einem Schlauch verbunden ist. Die Kupplungen können beispielsweise unter Druck, d.h. ohne die Anlage stillzusetzen, über Meßschläuche mit den entsprechenden Meßgeräten verbunden werden. Bei Anschluß fest installierter Geräte, zum Beispiel Manometer, Manometer-Wahlschalter, elektrische Druckgeber und Druckschalter, können die flexiblen Meßschläuche wie Elektrokabel verlegt werden, so daß eine aufwendige Rohrverlegung entfällt. Mit solchen Meßkupplungen lassen sich daher die effektiven Arbeitsdrücke direkt in der Fluid-Leitung messen, wobei kein Lösen von Entlüftungsschrauben und Rohrverschraubungen erforderlich ist. Solche Kupplungen finden bei den verschiedensten Bauelementen und Regelungen von Fluid-Systemen Verwendung. Nach dem Trennen des Kupplungsanschlusses wird auf die Kupplungsbuchse mit Außengewinde eine Schutzkappe aufgeschraubt, die den Zweck hat, das Eindringen von Schmutz in die Kupplungsbuchse zu verhindern und welche darüberhinaus eine zusätzliche Abdichtfunktion übernimmt, für den Fall, daß ein in die Kupplungsbuchse installiertes Rückschlagventil nicht absolut dicht schließt.

Für die Messung der Temperaturen des fluidischen Mediums sind gleichwertige Meßkupplungen zur Zeit nicht bekannt. Bisher werden die Temperaturen des fluidischen Mediums entweder mit fest installierten Temperaturfühlern, welche im Flüssigkeitsstrom des Systems liegen, gemessen oder es werden hermetisch dichte Tauchrohre verwendet, in die Temperaturfühler eingebaut sind.

Die fest installierten Temperaturfühler haben den Nachteil, daß im Servicefall ein Temperatur-Fühlerwechsel in sehr nachteiliger Weise nur bei einer Betriebsstillegung der Anlage durchführbar ist.

Bei Installationen mit Tauchrohren wird in vielen Fällen wegen der Unkenntnis der meßtechnischen Anforderungen nicht die gewünschte Medientemperatur, sondern die Gehäusetemperatur oder ein von der gewünschten Medientemperatur abweichender und damit fehlerhafter Zwischenwert gemessen.

Demzufolge sind auch Meßkupplungen, an denen beide physikalischen Größen, nämlich Druck und Temperatur, gemessen werden können, nicht bekannt.

Der vorliegenden Erfindung liegt daher die Aufgabe zugrunde unter Verwendung der an sich bekannten Meßkupplung eine solche Abwandlung derselben vorzuschlagen, daß mit der gleichen Meßkupplung sowohl die Drucke des Systems als auch die Temperaturen des fluidischen Mediums gemessen werden können, wobei während des Betriebes lediglich der Anschluß zum Druckgerät gegen einen Temperaturfühler ausgetauscht wird, während die Meßkupplung mit dem System fest installiert bleibt.

Das fluidische System soll daher gemäß der Aufgabenstellung während des genannten Austausches nicht drucklos geschaltet werden.

Die Lösung dieser Aufgabe besteht gemäß der Erfindung darin, daß der Ventilkörper über das dem fluidischen System zugekehrte Ende der Kupplungsbuchse hinaus verlängert ist, und sich die radiale Querbohrung oder der Querschlitz in der Wandung des Führungsteils des Ventilkörpers befindet, wobei zwischen dem Ventilkörper und der Kupplungsbuchse bis zur radialen Querbohrung oder dem Querschlitz ein Strömungsschlitzkanal ausgebildet ist.

Die Querbohrung oder der Querschlitz ermöglichen im Zusammenwirken mit dem Strömungsschlitzkanal den ungehinderten Zufluß des fluidischen Mittels durch den Ventilkörper zum Meßgerät, so daß stets der im System herrschende Druck sich bei Druckmessungen über die radiale Querbohrung oder den Querschlitz fortpflanzt und der wahre Druck gemessen wird.

Ferner wird durch diese Maßnahmen nach der Erfindung erreicht, daß bei Temperaturmessungen im flüssigen Medium ein eventuell in dem Ventilkörper vorhandenes und als Isolator wirkendes Gas verdrängt wird, so daß stets für eine gute Wärmeübertragung an den Temperaturfühler durch direkten Kontakt mit dem flüssigen Medium gesorgt ist, und somit schnelle dynamische Temperaturwechsel erfaßt werden.

Der Ventilkörper weist in vorteilhafter Weise einen die Dichtfläche bildenden, um den Ventilkörper geführten Kragen auf, der gleichzeitig als Anschlag für eine zylindrische Druckfeder dient.

Die Stirnfläche des Ventilkörpers ist als gerade Planfläche oder als Kegeltrichter ausgebildet, so daß je nach Gestaltung des Nippels der Anschlußarmatur eine gute Anpassung gegeben ist.

In Weiterbildung der Erfindung weist der Ventilkörper einen Anschlagbund auf, welcher derartig ausgebildet ist, daß er an der Anschlagfläche der Kupplungsbuchse anschlägt, während das Führungsteil sich noch in der Buchsenbohrung befindet, womit eine ausreichende und sichere Führung des Ventilkörpers gegeben ist.

Die Bohrung des unteren Teils der Kupplungsbuchse ist mit einem größeren Durchmesser versehen als der übrige Teil der Bohrung, derart, daß mit dem verjüngten Teil des Ventils eine zylindrische Wirbelkammer gebildet ist. Das fluidische Medium umspült somit den Ventilkörper über einen relativ großen Teil seiner Länge, wodurch für eine gute Temperaturanpassung bzw. Temperaturübertragung gesorgt wird.

Zur weiteren Verbesserung dieses Effektes ist die Wirbelkammer in ihrem unteren, dem fluidischen Medium zugekehrten Teil mit einer kegelförmigen Erweiterung versehen.

In vorteilhafter Weiterentwicklung der Erfindung weist der aufschraubbare elektrische Temperaturfühler eine verjüngte Fühlerspitze mit einem konischen Übergang auf.

Ein Verdrehsicherungsring ist unter Vorspannung in der Gewindehinterdrehung der Kupplungsbuchse und der Aussparung der Überwurfmutter in vorteilhafter Weise angeordnet.

Ferner ist nach der Erfindung ein Führungsspalt in Verbindung mit in der Kupplungsbuchse befindlichen Kerben vorgesehen, so daß sich ein freier Durchflußquerschnitt ergibt, der der Nennweite des anzuschließenden Druckschlauches entspricht.

In der erweiterten Bohrung des Buchsenführungsteils sind ein O-Ring und ein Stützring angeordnet.

Das Kupplungsgewinde ist vorzugsweise als Sägezahngewinde ausgebildet.

Die Erfindung wird anhand der Zeichnung, in der verschiedene Ausführungsbeispiele dargestellt sind, näher erläutert. Hierbei zeigen:

Figur 1 einen Längsschnitt durch die Meßkupplung nach der Erfindung zur Erfassung von Temperaturen und Drücken mit aufgesetzter Stahlschraubkappe;

Figur 2 einen Längsschnitt durch die Meßkupplung nach der Erfindung zur Erfassung von Temperaturen und Drücken mit angeschlossenem Hochdruckschlauch für Druckmessungen;

Figur 3 einen Längsschnitt durch die Meßkupplung nach der Erfindung zur Erfassung von Temperaturen und Drücken mit angeschlossenem Temperaturfühler für Temperatur und/oder thermostatische Messungen;

Figur 4 einen Ausschnitt aus den Figuren 1 - 3, darstellend einen Teil des Buchsenführungsteils mit dem Ventilkörper, wobei dieser eine gerade Planfläche aufweist; und

Figur 5 einen Teilschnitt A - B aus Figur 1.

In den Figuren sind gleiche Elemente mit gleichen Bezugzeichen versehen.

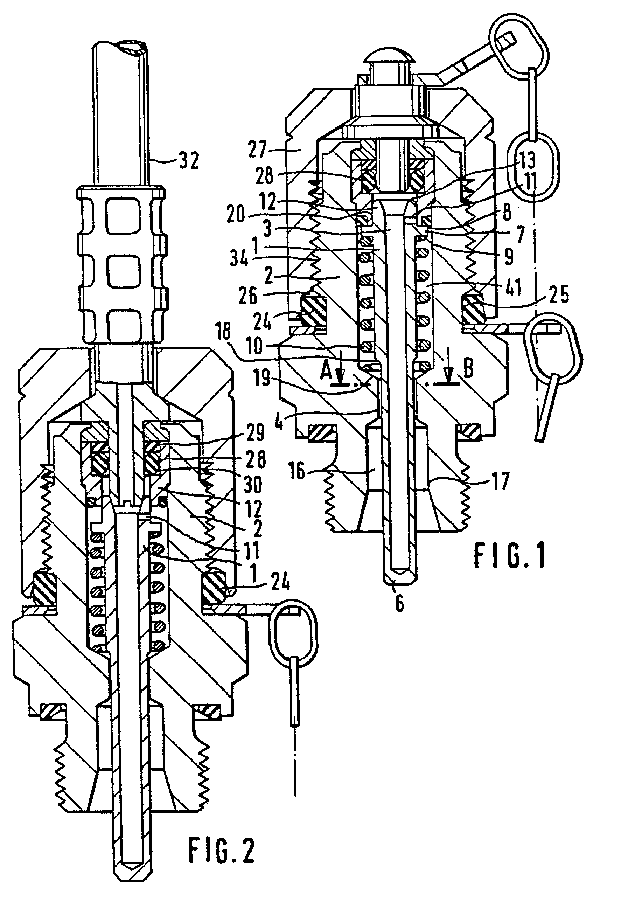

Die Figur 1 zeigt eine Meßkupplung im Querschnitt, welche zur Temperatur- oder Druckmessung dient. Die Meßkupplung ist mit einer Überwurfmutter 27 verschraubt, welche für die beabsichtigten Meßzwecke zu lösen ist und welche für den Schutz gegen Verschmutzung sorgt. Darüberhinaus bietet die als Schutzkappe ausgebildete Überwurfmutter noch eine größere Sicherheit gegen Undichtigkeiten des Rückschlagventils, falls solche dort auftreten sollten. Das Rückschlagventil der Meßkupplung ist als ein mit einer zylindrischen Bohrung 3 und einer geschlossenen Bodenfläche 6 versehener Ventilkörper 1 ausgebildet, der über das dem fluidischen System zugekehrte Ende der Kupplungsbuchse 2 hinaus verlängert ist.

In der Wandung des Ventilkörpers 1 befindet sich eine radiale Querbohrung 11 oder ein Querschlitz 33, welcher sich im unteren Teil des Ventilkörper 1 befinden kann, wie aus Figur 6 ersichtlich ist, oder welche auch in der Wandung des Führungsteils 42 des Ventilkörpers 1 angeordnet sein kann, wie aus den Figuren 1 - 3 zu entnehmen ist.

Zwischen dem Ventilkörper 1 und der Kupplungsbuchse 2 ist in diesem Ausführungsbeispiel bis zur radialen Querbohrung 11 oder dem Querschlitz 33 ein Strömungsschlitzkanal 4,41 ausgebildet, so daß das fluidische Medium vom System durch den Strömungsschlitzkanal 4, 41 und durch den Querschlitz 33 oder die Querbohrung 11 in das Innere des Ventilkörpers 1 eindringen kann.

Der Ventilkörper 1 weist einen eine Dichtfläche 8 bildenden und um den Ventilkörper 1 geführten Kragen 7 auf, der gleichzeitig als Anschlag 9 für die zylindrische Druckfeder 10 dient.

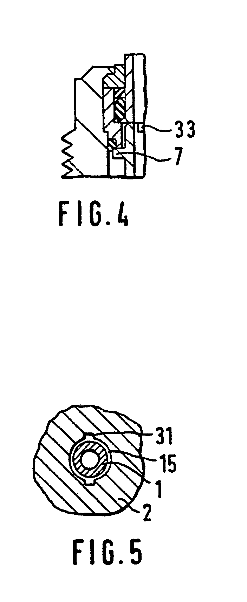

Die Stirnfläche 13 des Ventilkörpers 1 ist gemäß den Ausführungsbeispielen nach den Figuren 1 - 3 als Kegeltrichter geformt, während die Figur 4 eine Ausführung mit gerader Planfläche zeigt.

Der Ventilkörper 1 ist ferner mit einem Anschlagbund 18 versehen, welcher derartig ausgebildet ist, daß er an der Anschlagfläche 19 der Kupplungsbuchse 2 anschlägt, während das Führungsteil 12 noch in der Buchsenbohrung 20 verbleibt, so daß eine sichere Halterung und Führung des Ventilkörpers 1 gegeben ist.

Die Bohrung 17 des unteren Teils der Kupplungsbuchse 2 ist mit einem größeren Durchmesser versehen als der übrige Teil der Bohrung, so daß mit dem verjüngten Teil des Ventils 1 eine zylindrische Wirbelkammer 16 gebildet ist. Hierdurch wird der untere Teil des Ventilkörpers 1 von dem Fluid umspült, so daß dadurch der Wärmeübergang begünstigt wird und und somit auch kurzfristige Temperaturänderungen gemessen werden können.

In einer nicht näher dargestellten Ausführungsform kann die Wirbelkammer 16 in ihrem unteren, dem fluidischen Medium zugekehrten Teil eine kegelförmige Erweiterung aufweisen, so daß der genannte Effekt auf diese Weise noch vergrößert, d.h. weiter verbessert werden kann.

Die Figur 2 zeigt eine Meßkupplung, welche als Druckmeßkupplung ausgerüstet ist. Hierbei ist ein Druckschlauch 32 mit einer entsprechenden Überwurfmutter mit der Kupplungsbuchse 2 verschraubt. Mit dem Druckschlauch 32 ist ein Nippel integriert, mit dessen Hilfe der Ventilkörper 1 aufgestoßen wird, so daß dadurch die Druckverbindung mit dem nicht näher dargestellten Manometer hergestellt wird.

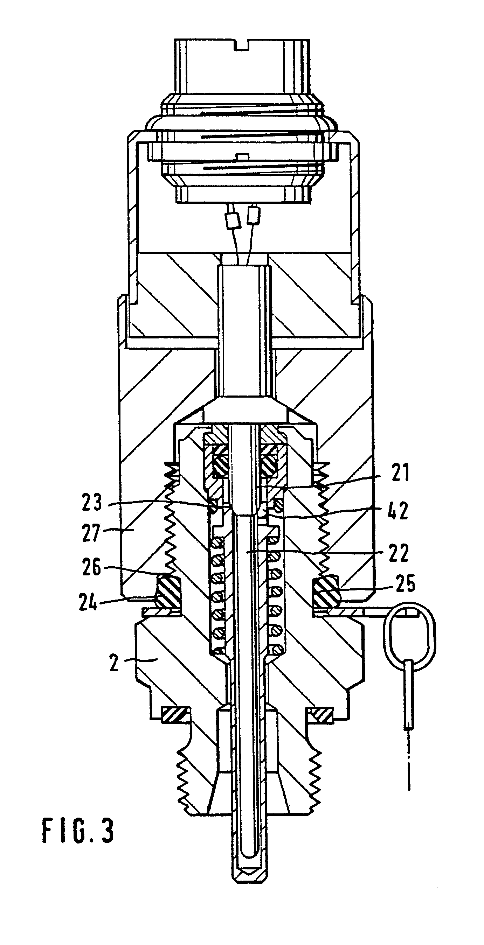

Wie aus der Figur 3 zu entnehmen ist, ist der aufschraubbare elektrische Temperaturfühler 21 mit einer sich verjüngenden Fühlerspitze 22 versehen, welche einen konischen Übergang 23 aufweist.

Ein Verdrehsicherungsring 24 ist unter Vorspannung in der Gewindehinterdrehung 25 der Kupplungsbuchse 2 und der Aussparung 26 der Überwurfmutter 27 angeordnet, siehe hierzu besonders Figur 1 aber auch die Figuren 2 und 3.

Die Figur 5 zeigt einen Teilschnitt A - B aus Figur 1. Der Führungsspalt 15, der zwischen der Kupplungsbuchse 2 und dem Ventilkörper 1 gebildet ist, ist durch Kerben 31 derart vergrößert, daß sich ein freier Durchflußquerschnitt ergibt, welcher der Nennweite des anzuschließenden Druckschlauches 32 entspricht. In der erweiterten Bohrung 30 des Buchsenführungsteils 12 ist ein O-Ring 28 und Stützring 29 angeordnet.

Das Kupplungsgewinde 34 ist vorzugsweise als Sägezahngewinde ausgebildet.

Sofern keine der Druckprüf- und Meßarbeiten durchgeführt werden ist die Kupplungsbuchse 2 mit der Überwurfmutter 27 verschraubt und damit gegen Verschmutzung gesichert.

Soll der Druck des Systems gemessen werden, werd ein Schlauchnippel, der mit einem Druckschlauch 32 fest verbunden ist, auf die Kupplungsbuchse 2 aufgeschraubt und der Arbeitsdruck wird an einem nicht näher dargestellten Manometer angezeigt.

Eine entsprechende Messung kann auch mit einem elektrischen Drucksensor durchgeführt werden, der fest mit einer Überwurfmutter und einem Schlauchnippel verbunden ist.

Soll die Temperatur des fluidischen Mediums gemessen werden, werden die genannten Druckmeßgeräte abgeschraubt, der Temperaturfühler 21, siehe hierzu Figur 3, wird mit seiner Fühlerspitze 22 in den Ventilkörper 1 eingeführt und der Temperaturfühler 21 mit Hilfe einer Überwurfmutter mit der Kupplungsbuchse 2 verschraubt. Die Fühlerspitze 22 ist mit dem fluidischen Medium direkt in Verbindung und da ferner der Ventilkörper 1 in den fluidischen Strom des Systems eintaucht, kann nicht nur die Temperatur des Systems, sondern auch jede Temperaturänderung unmittelbar gemessen und angezeigt werden.

Das fluidische System kann somit ohne Abschaltung und ohne jegliche Veränderung oder Beeinflussung durch die Einführung der Druck- oder Temperatursonden hinsichtlich seines Temperatur- und Druckverlaufes exakt überwacht werden. Da die Meßkupplung mit dem System stets verbunden ist, können die Messungen zu jeder Zeit ohne besondere Vorbereitungen durchgeführt werden.

Ferner ist von großem Vorteil, daß auch bereits auf dem Markt befindliche konventionelle Meßkupplungen lediglich durch Austausch des Ventilkörpers für Druck- und Temperaturmessungen verwendet werden können.

## Patentansprüche

1. Meßkupplung für fluidische Systeme zur Erfassung von Arbeitsdrücken oder Temperaturen der fluidischen Medien, bestehend aus einer im eingebauten Zustand unter Leitungsdruck stehenden Kupplungsbuchse, in deren Bohrung ein federbelastetes und mechanisch betätigbares Rückschlagventil angeordnet ist, welches als ein mit einer zylindrischen Bohrung und einer geschlossenen Bodenfläche versehener Ventilkörper ausgebildet ist, wobei in der Wandung des Ventilkörpers eine radiale Querbohrung oder ein Querschlitz angeordnet ist, dadurch gekennzeichnet, daß der Ventilkörper (1) über das dem fluidischen System zugekehrte Ende der Kupplungsbuchse (2) hinaus verlängert ist, und sich die radiale Querbohrung (11) oder der Querschlitz (33) in der Wandung des Führungsteils (42) des Ventilkörpers (1) befindet, wobei zwischen dem Ventilkörper (1) und der Kupplungsbuchse (2) bis zur radialen Querbohrung (11) oder dem Querschlitz (33) ein Strömungsschlitzkanal (4, 41) ausgebildet ist.

2. Meßkupplung nach Anspruch 1, dadurch gekennzeichnet, daß der Ventilkörper (1) einen eine Dichtfläche (8) bildenden und um den Ventilkörper (1) geführten Kragen (7) aufweist, der gleichzeitig als Anschlag (9) für eine zylindrische Druckfeder (10) ausgebildet ist.

3. Meßkupplung nach Anspruch 1 oder 2, dadurch gekennzeichnet, daß die Stirnfläche (13) des Ventilkörpers (1) als gerade Planfläche ausgebildet ist.

4. Meßkupplung nach Anspruch 1 oder 2, dadurch gekennzeichnet, daß die Stirnfläche (13) des Ventilkörpers (1) als Kegeltrichter ausgebildet ist.

5. Meßkupplung nach Anspuch 1 oder einem der voranstehenden Ansprüche, dadurch gekennzeichnet, daß der Ventilkörpers (1) einen Anschlagbund (18) aufweist, welcher derartig ausgebildet ist, daß er an der Anschlagfläche (19) der Kupplungsbuchse (2) anschlägt, während das Führungsteil (12) noch in der Buchsenbohrung (20) verbleibt.

6. Meßkupplung nach Anspruch 1 oder einem der voranstehenden Ansprüche, dadurch gekennzeichnet, daß die Bohrung (17) des unteren Teils der Kupplungsbuchse (2) einen größeren Durchmesser aufweist als der übrige Teil der Bohrung, derart, daß mit dem verjüngten Teil des Ventils (1) eine zylindrische Wirbelkammer (16) gebildet ist.

7. Meßkupplung nach Anspruch 6, dadurch gekennzeichnet, daß die Wirbelkammer (16) in ihrem unteren, dem fluidischen Medium zugekehrten Teil eine kegelförmige Erweiterung aufweist.

8. Meßkupplung nach Anspruch 1 oder einem der voranstehenden Ansprüche, dadurch gekennzeichnet, daß ein aufschraubbarer elektrischer Temperaturfühler (21) eine sich verjüngende Fühlerspitze (22) mit einem konischen Übergang (23) aufweist.

9. Meßkupplung nach Anspruch 1 oder einem der voranstehenden Ansprüche, dadurch gekennzeichnet, daß ein Verdrehsicherungsring (24) unter Vorspannung in der Gewindehinterdrehung (25) der Kupplungsbuchse (2) und der Aussparung (26) der Überwurfmutter (27) angeordnet ist.

10. Meßkupplung nach Anspruch 1 oder einem der voranstehenden Ansprüche, dadurch gekennzeichnet, daß ein Führungsspalt (15) in Verbindung mit in der Kupplungsbuchse (2) befindlichen Kerben (31) einen freien Durchflußquerschnitt ergibt, der der Nennweite des anzuschließenden Druckschlauches (32) entspricht.

11. Meßkupplung nach Anspuch 1 oder einem der voranstehenden Ansprüche, dadurch gekennzeichnet, daß ein O-Ring (28) und Stützring (29) in der erweiterten Bohrung (30) des Buchsenführungsteils (12) angeordnet sind.

12. Meßkupplung nach Anspuch 1 oder einem der voranstehenden Ansprüche, dadurch gekennzeichnet, daß das Kupplungsgewinde (34) vorzugsweise als Sägezahngewinde ausgebildet ist.

## Claims

1. Measuring connection for fluid systems, for taking working pressures or temperatures of fluid media, consisting of a coupling sleeve which is under duct pressure in the built-in state, and in the bore of which is arranged a spring-loaded and mechanically actuatable check valve, which is constructed as a valve body provided with a cylindrical bore and a closed bottom face, whereby a radial transverse bore or a transverse slot is located in the wall of the valve body, characterized in that the valve body (1) is prolonged beyond the end of the coupling bushing (2) facing the fluid system, and the radial transverse bore (11) or the transverse slot (33) is located in the wall of the guide part (42) of the valve body (1) and in that a flow slot channel (4, 41) is formed between the valve body (1) and the coupling bushing (2) as far as the radial transverse bore (11) or the transverse slot (33).

2. Measuring connection according to claim 1, characterized in that the valve body (1) has a collar (7) which is formed about the valve body (1), forms a sealing face (8), and at the same time is constructed as a stop (9) for the cylindrical compression spring (10).

3. Measuring connection according to claim 1 or 2, characterized in that the end face (13) of the valve body (1) is constructed as a right planar face.

4. Measuring connection according to claim 1 or 2, characterized in that the end face (13) of the valve body (1) is constructed as a conical mouth.

5. Measuring connection according to claim 1 or one of the preceding claims, characterized in that the valve body (1) has a stop shoulder (18), which is constructed such that it strikes against the stop face (19) of the coupling bushing (2) while the guide part (12) still remains in the bushing bore (20).

6. Measuring connection according to claim 1 or one of the preceding claims, characterized in that the bore (17) of the lower part of the coupling bushing (2) has a greater diameter than the remaining portion of the bore, such that a cylindrical vortex chamber (16) is formed with the tapered portion of the valve (1).

7. Measuring connection according to claim 1 or one of the preceding claims, characterized in that the vortex chamber (16) has a conical enlargement in its lower part, which faces the fluid medium.

8. Measuring connection according to claim 1 or one of the preceding claims, characterized in that an electrical temperature sensor (21), which can be screwed on, has a tapering sensor tip (22) with a conical transition (23).

9. Measuring connection according to claim 1 or one of the preceding claims, characterized in that a torsional securement ring (24) is arranged, under prestress, in the thread relief (25) of the coupling bushing (2) and the recess (26) of the screwed cap (27).

10. Measuring connection according to claim 1 or one of the preceding claims, characterized in that a guide aperture (15), in combination with notches (31) located in the coupling bushing (2), gives a free throughflow cross section which corresponds to the nominal width of the pressure hose (32) to be connected.

11. Measuring connection according to claim 1 or one of the preceding claims, characterized in that an O-ring (28) and support ring (29) are arranged in the widened bore (30) of the bushing guide part (12).

12. Measuring connection according to claim 1 or one of the preceding claims, characterized in that the coupling thread (34) is preferably developed as a saw-toothed thread.

## Revendications

1. Accouplement de mesure pour systèmes fluidiques en vue de déterminer des pressions de travail ou des températures de milieux fluides, cet accouplement comprenant une douille d'accouplement qui, lorsqu'elle est montée, subit une pression de canalisation et dans le passage de laquelle est disposée une soupape de retenue sollicitée par un ressort et pouvant être actionnée mécaniquement, qui est réalisée sous forme d'un corps de soupape pourvu d'un passage cylindrique et d'une surface inférieure fermée dans la paroi du corps de soupape, un passage transversal radial ou une fente transversale se trouvant dans la paroi du corps de soupape, caractérisé en ce que le corps de soupape (1) est prolongé au-delà de l'extrémité de la douille d'accouplement (2) qui est tournée vers le système fluidique et que le passage transversal radial (11) ou la fente transversale (33) se trouve dans la paroi de la partie de guidage (42) du corps de soupape (1), entre le corps de soupape (1) et la douille d'accouplement (2), un canal à fente d'écoulement (4, 41) étant réalisé jusqu'au passage transversal radial (11) ou jusqu'à la fente transversale (33).

2. Accouplement de mesure selon la revendication 1, caractérisé en ce que le corps de soupape (1) comporte un collet (7) formant une surface d'étanchéité (8) et guidé autour du corps de soupape (1), ce collet étant en même temps réalisé sous forme d'une butée (9) pour le ressort à pression cylindrique (10).

3. Accouplement de mesure selon la revendication 1 ou 2, caractérisé en ce que la surface frontale (13) du corps de soupape (1) est réalisée sous forme d'une surface plane.

4. Accouplement de mesure selon la revendication 1 ou 2, caractérisé en ce que la surface frontale (13) du corps de soupape (1) est réalisée sous forme d'un entonnoir conique.

5. Accouplement de mesure selon la revendication 1, ou une des revendications précédentes, caractérisé en ce que le corps de soupape (1) comporte un collet de butée (18) réalisé de telle sorte qu'il vienne heurter la surface de butée (19) de la douille d'accouplement (2), tandis que la partie de guidage (12) reste encore dans le passage (20) de la douille.

6. Accouplement de mesure selon la revendication 1 ou une des revendications précédentes, caractérisé en ce que le passage (17) de la partie inférieure de la douille d'accouplement (2) a un plus grand diamètre que celui de la partie restante de ce passage de façon à former une chambre cylindrique de tourbillonnement (16) avec la partie rétrécie de la soupape (1).

7. Accouplement de mesure selon la revendication 6, caractérisé en ce que, dans sa partie inférieure tournée vers le milieu fluide, la chambre de tourbillonnement (16) comporte un élargissement conique.

8. Accouplement de mesure selon la revendication 1 ou une des revendications précédentes, caractérisé en ce qu'un capteur électrique de température (21) pouvant être vissé comporte une pointe (22) se rétrécissant avec une transition conique (23).

9. Accouplement de mesure selon la revendication 1 ou une des revendications précédentes, caractérisé en ce qu'une bague de sécurité contre la torsion (24) est disposée sous précontrainte dans la dépouille du filet (25) de la douille d'accouplement (2) et de l'évidement (26) de l'écrou d'accouplement (27).

10. Accouplement de mesure selon la revendication 1 ou une des revendications précédentes, caractérisé en ce que conjointement avec des rainures (31) formées dans la douille d'accouplement (2), un espace de guidage (15) ménage une section transversale libre d'écoulement correspondant au diamètre nominal du tuyau à pression à raccorder (32).

11. Accouplement de mesure selon la revendication 1 ou une des revendications précédentes, caractérisé en ce qu'un joint torique (28) et une bague d'appui (29) sont disposés dans le passage élargi (30) de la partie de guidage (12) de la douille.

12. Accouplement de mesure selon la revendication 1 ou une des revendications précédentes, caractérisé en ce que le filet d'accouplement (34) est réalisé, de préférence, sous forme d'un filet en dents de scie.

FIG.1

FIG.2

FIG. 3

FIG.4

33

7

FIG.5

31

15

1

2